# EUROPEAN PATENT SPECIFICATION

(11) **EP 3 954 516 B1**
(45) Date of publication and mention of the grant of the patent: **13.11.2024**
(21) Application number: 21187575.2
(22) Date of filing: 25.07.2021
(51) Int. Cl.: B27G 5/00, B27H 1/00, F16B 12/04

(54) **A PROCESS FOR MANUFACTURING FURNITURE WITH CURVED PANELS, CURVED PANELS AND FURNITURE MADE ACCORDING TO THE SAID PROCESS**
VERFAHREN ZUR HERSTELLUNG VON MÖBELN MIT GEBOGENEN PLATTEN, GEBOGENE PLATTEN UND NACH DIESEM VERFAHREN HERGESTELLTE MÖBEL
PROCÉDÉ DE FABRICATION DE MEUBLES À PANNEAUX COURBES, PANNEAUX COURBES ET MEUBLES FABRIQUÉS SELON LEDIT PROCÉDÉ

(30) Priority: 31.07.2020 SI 202000131
(43) Date of publication of application: 16.02.2022
(73) Proprietor: Podgorje d.o.o., 8310 Sentjernej (SI)
(72) Inventor: Tomazin, Alojz, 8274 Raka (SI); Ambrozic, Alojz, 8310 Sentjernej (SI); Stritar, Slavko, 8282 Koprivnica (SI)
(74) Representative: Patentni Biro AF d.o.o.

(56) References cited:
- WO-A1-2021/099886
- DE-A1- 102009 036 985
- DE-A1- 2 632 995
- DE-A1- 3 224 883
- DE-A1- 4 340 049
- GB-A- 1 536 423
- GB-A- 520 911
- US-A- 1 981 494
- US-A- 2 134 999
- US-A- 2 135 000
- US-A- 2 155 969

## Description

A process for manufacturing furniture with curved panels, according to the preamble of claim 1 curved panels and furniture made according to the said process, according to the preamble of claim 7. Such a process and such a panel are known from the document DE 32 24 883 A1.

### Field of the invention

The present invention belongs to the field of furniture, more precisely to the field of manufacturing of furniture. The present invention relates to a process for manufacturing of furniture with curved panels, curved panels and furniture made according to the said process.

### Background of the invention and the technical problem

Furniture is usually wooden objects for use in equipment of apartments, houses, business premisses, vehicles such as motorhomes and trailers, aircrafts, vessels such as yachts and sailboats. The most common furniture pieces are chairs, tables, beds, closets, dressers and shelves. Due to requirements regarding shape and appearance several furniture elements are curved. This is especially the case in design of closets and dressers with drawers, wherein panels are curved in angles in order to improve the aesthetics and to prevent unwanted hits and injuries.

A special field of furniture is furniture for motorhomes, trailers, planes and vessels, which share the characteristic of limited space. Furthermore, it is an advantage if furniture elements may be used in several different ways. Curved panels for walls, sides, doors, drawers and other front panels are even more common in such multipurpose furniture elements. Usually, said furniture pieces are made according to the principle of thin layers, which are pressed, glued and shaped using heating and/or vacuum (so called frequency, membrane or cold press). A radio-frequency laminating method was described in patent application US20160361833. A disadvantage of said methods is that moulds are needed for different curve dimension, shapes and dimensions, the process is longer and more expensive, while the basic material for such products is more expensive.

Therefore, the technical problem, which is solved by the present invention, is a development of an alternative method for manufacturing curved components of furniture, which will be simpler and more economic than currently known methods. At the same time, it is required that the curves made according to the improved process ensure higher stability of furniture in comparison to current furniture pieces. An aim of the invention is also use of common, commercially available base plywood (base plate), which are not suitable for the above-mentioned pressing.

### State of the art

Document RU2704463 describes manufacturing of furniture elements, in which required curved parts are made with cutting or sawing the wanted segments. A similar method is disclosed in patent application CN110000874.

Furniture with curved parts is according to patent application CN109500961 made using a process, which includes heating of the material, cold formation, drying, cutting and processing, which differs from the present invention. Document CN105926873 relates to making curved parts for armrests in armchairs, wherein several layers are glued and compressed into a required shape. Bending is also used in solutions according to documents CN201349777 and CN109838035.

Patent application US2009218038 discloses a method for making furniture doors, wherein a first and a second plate made from wood, plastics or metal is bent using cold formation. An intermediate layer is inserted between the said first and second plates and glued. This process generates curved furniture doors or plates for furniture.

Patent application GR1002452 describes lamination of several layers, which is used in methods for manufacturing furniture, where for shaping required furniture structures a mould is used, based on which a curved or specially designed plate is made using a press.

Alternatively, for shaping curved parts such as deckchairs, chairs and similar a set of suitably shaped rods may be used, said rods having trapezium shape that alternate in the curved areas, so that a suitable curve corresponding for example to a human back is achieved. Along straight parts rods with rectangular or square cross-section are used and glued together.

All above-described solutions differ from the present invention, as they use generally used methods or require combinations of different materials or differently shaped components.

### Description of the solution of the technical problem

The essence of the process for manufacturing furniture with curved plates is in that the starting (basic or base) material is a common, commercially available flat, straight plate, from which the majority of a furniture piece is made and that the said base plate is re-shaped into a curved panel according to the following steps:
a) cutting the base plate to a required width and/or length and optionally, addition of edge elements or tapes or bands,
b) making a suitable groove in the area where the curve is required, wherein
   - The groove ends at about 0.5 to 3 mm, preferably 2 mm of the thickness of the plate, in
   - The said groove has any cut-out, preferably the cut-out is in the shape of letter C or S, which is optionally continued with an elongated straight or curved part,
c) making a suitable shaping insert, wherein its shape is arranged to allow the insert to be inserted into the said groove made in the step b),

a) inserting the shaping insert made in step c) and gluing or stabilizing the shaping insert into the groove,
b) bending of the plate around the insert inserted into the groove in step d) to make the curved panel, and
c) optionally additional shaping, grinding and/or processing of the curved panel made in the step e).

The base plate may be any suitable plate, preferably a plate provided with various decorative elements or layers on the outer side. The thickness of the plates may be from 8 to 26 mm, preferably from 10 to 20 mm, usually 12 or 16 mm. The said groove is made in such a manner that a part of the plate remains intact, at least in the thickness of one layer of outer veneer, which is a longitudinal veneer in order to enable optimal bending. The stability of the outer veneer is ensured with the second layer of veneer, which is transverse to the first layer and enables correct bending. The outer layer is usually a longitudinal veneer, while the next layer is the transverse veneer, and the groove is made, according to the invention transversely, which indicates the direction of bending. The thickness of the remaining plate under the groove is usually 0.5 to 3 mm, preferably up to 2 mm. If the thickness of the remaining plate in the groove was larger, bending would be hampered or even prevented, possibly leading to breaking of the second layer of veneer. The thickness of the remaining plate once the groove is made in addition to the outer veneer layer preferably includes one more layer or a part of the second layer, which has a transverse orientation with regards to the outer layer. However, only the outer layer in a suitable thickness of 1 to 2 mm or a remainder of the MDF or HDF plate in a thickness of 0.8 to 2.5 mm can remain.

The groove is made using CNC milling using a custom-made or standard tools and is made in any width with regards to the angle of the curve of the panel. The groove in the plate may have any cut-out, it may be perpendicular to the remaining plate, preferably it is curved in order to prevent the plate breaking during curving. The most optimal shape of the groove is in the approximate letter C or S closer to the outer layer of the plate (outer part of the curve), which can continue with a straight or a curved part towards the inner part of the curve. Thus shaped groove ensures a reliable fitting of the shaping insert, which cannot slide from the groove during bending of the plate. The glue used for stabilization of the insert in the groove may be any glue that is suitable for use in wooden products, preferably a polyvinyl acetate (PVA) glue or polyurethane (PU) glue is used. Instead of the glue, stabilization may be ensured with corner elements, which are screwed in the interior of the curve, however, the curve has then a poorer stability. Stabilization of the insert in the groove may be achieved with gluing and the corner element installed in the inner part of the curve, which is particularly useful in curves where legs have larger dimensions.

The insert is made from a suitable panel or lath of suitable dimensions with regards to the groove and the angle of curvature, wherein the insert has to correspond to the shape of the edge of the groove, so that the connection between the insert and the groove will be reliable and complete, i.e., that there will be no intermediate gaps or slits in the final curved panel.

Angles of curvature are arbitrary from 10° to 180°, preferably 30°, 45°, 60°, 90°, 100°, while the curvature radius may be from 20 to 250 mm, usually around 60 mm. Curvature angles and radius are intended for adapting the shape of the panel to the space or part of the furniture, so that full flexibility of manufactured furniture pieces is ensured.

The process according to the invention is suitable for manufacturing plates of any dimension and for various uses, such as walls, sides, doors, cabinet doors, front panels for drawers and other elements, which have at least one curved area. In case the required shape of the panel has two or more curves, a higher number of grooves and corresponding shaping inserts is made.

Curved panels made with the process according to the invention are characterized in that they are made from a single straight plate having a groove, into which a shaping insert is installed and the plate is bent around the said shaping insert. The curved panel made according to the process according to the invention is thus characterized in that it is made from one flat, straight plate having a groove, into which the shaping insert is installed and the plate is curved around the said insert. The curved panel may have two or more grooves with inserts, if the final panel is curved twice or more. Said panels may be used in any furniture element or as a finishing element (for example side of a closet or a dresser). In addition, further protective elements may be installed on the curved panel, said protective elements may be a metal part, a water-resistant material or similar.

The process for manufacturing furniture with curved panels, curved panels and furniture made according to the said process will be described in further details based on exemplary embodiments and figures, which show:
- Figure 1: A first embodiment of the groove in the base panel (a), which has to be curved, the shaping insert (b) and the curved panel made with the process according to the invention (c)
- Figure 2: A second embodiment of the groove in the base panel (a), which has to be curved, the shaping insert (b) and the curved panel made with the process according to the invention (c)
- Figure 3: A third embodiment of the groove in the base panel (a), which has to be curved, the shaping insert (b) and the curved panel made with the process according to the invention (c)
- Figure 4: A fourth embodiment of the groove in the base panel (a), which has to be curved, the shaping insert (b) and the curved panel made with the process according to the invention (c)
- Figure 5: A fifth embodiment of the groove in the base panel (a), which has to be curved, the shaping insert (b) and the curved panel made with the process according to the invention (c)

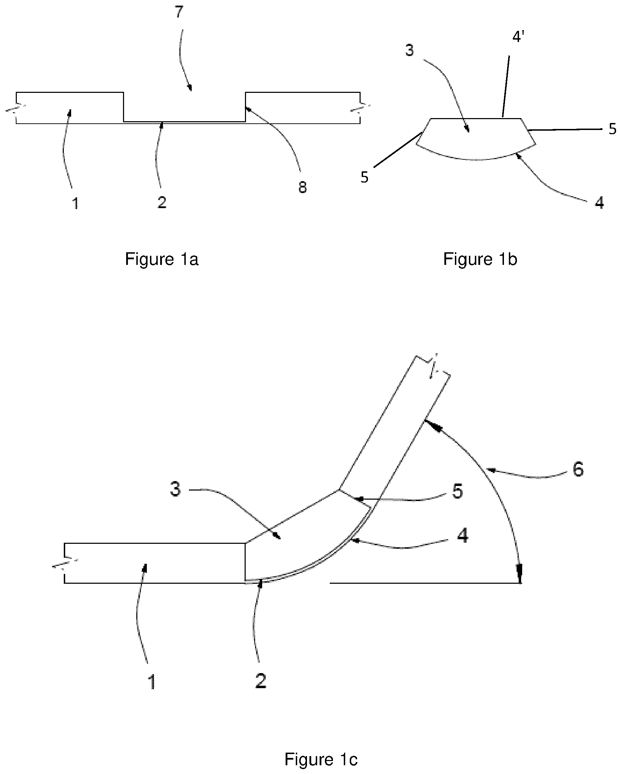

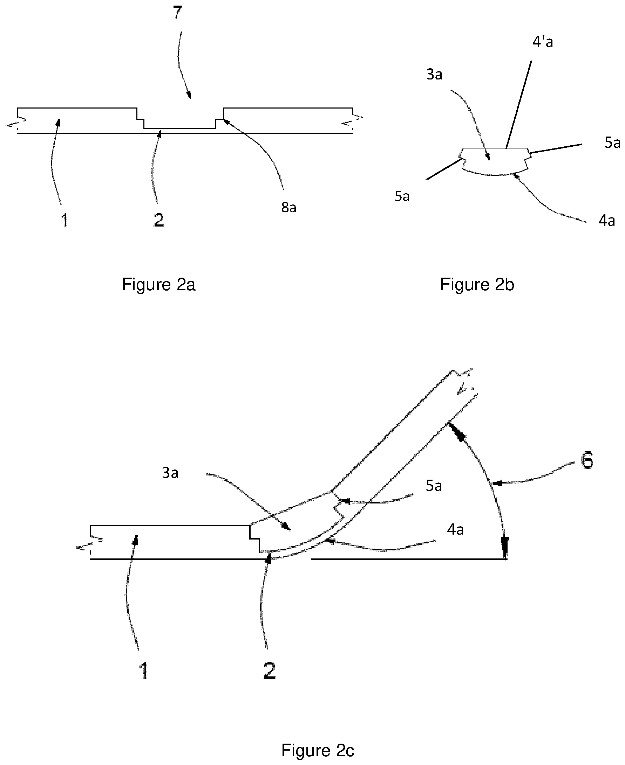

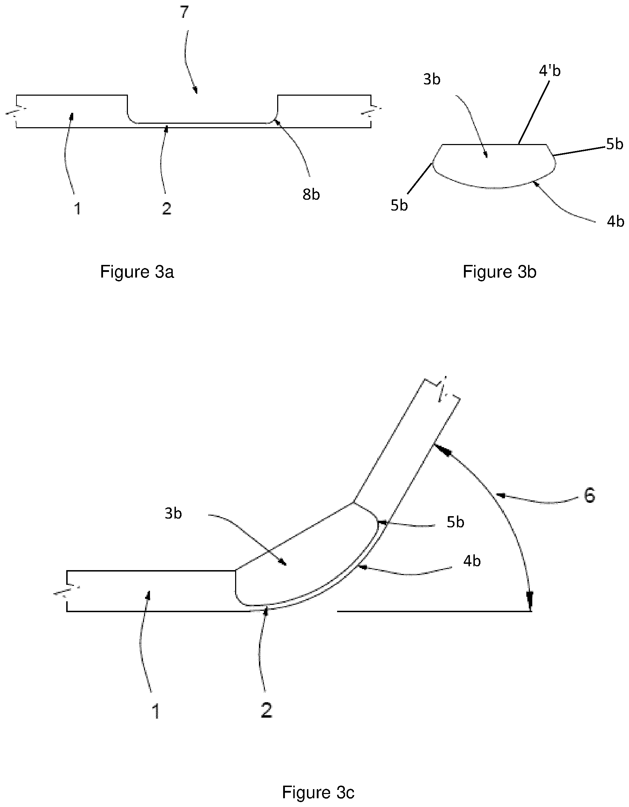

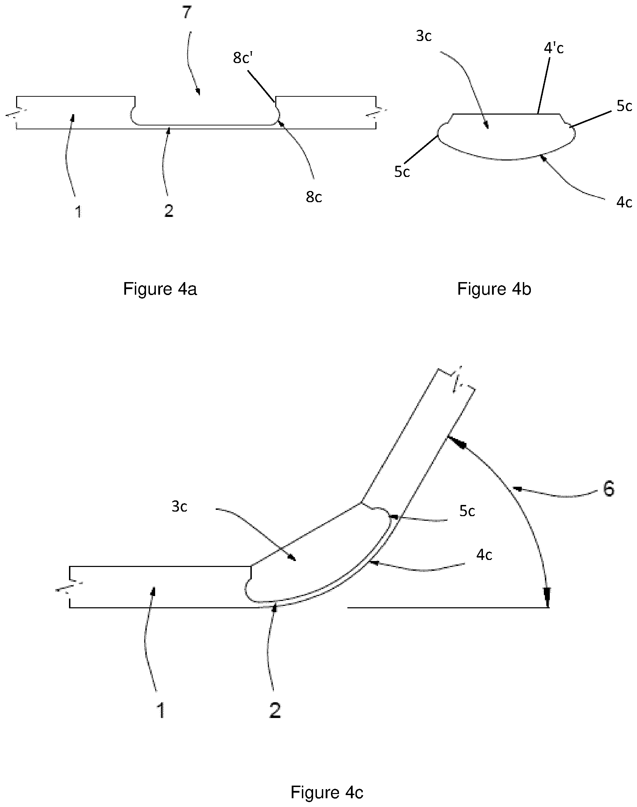

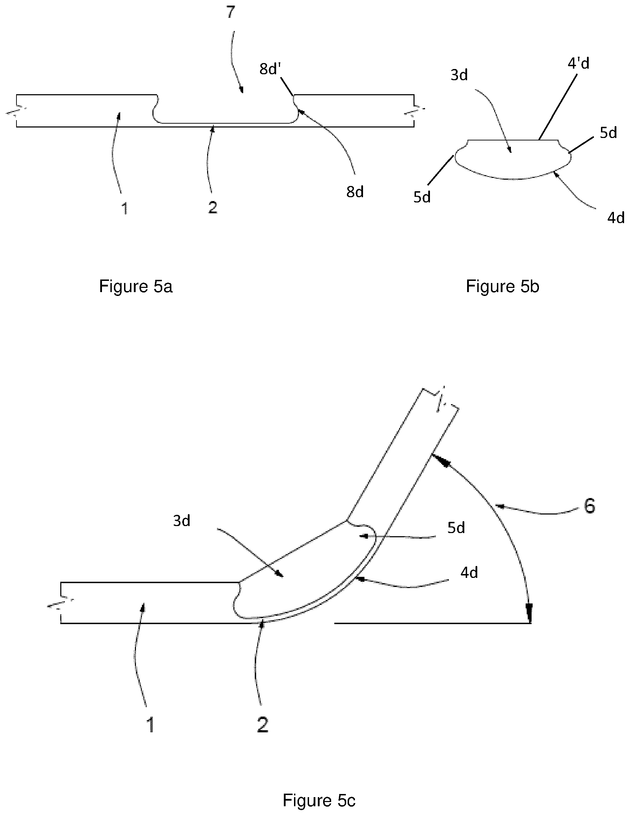

Figures 1a to 5a and 1b to 5b show possible embodiments of the groove 7 made in the base plate 1 and the shaping insert 3, 3a, 3b, 3c, 3d, wherein according to the first embodiment the cut-out between the cut-out 8 and the remaining part 2 of the plate 1 is perpendicular, while according to the second embodiment the cut-out 8a is stepped, according to a third embodiment the cut-out 8b is perpendicular with a rounded angle, according to a fourth embodiment it is shaped as a letter C 8c with an elongated part 8c' towards the inner part of the curve, according to a fifth embodiment it is shaped as a letter S or C 8d with a curved elongated part 8d' towards the inner part of the curve. The most optimal embodiments are the fourth and the fifth embodiment, as they prevent breaking of the bended plate, while due to the shape of the cut-out the insert is safely installed in the curved part of the plate even without gluing as movement of the insert is prevented. The insert has a first straight base side 4', 4'a, 4'b, 4'c, 4'd and a second curved base side 4, 4a, 4b, 4c, 4d with a curvature radius suitable to achieve the required angle 6 of the plate. Both base sides are on both ends connected with a third and a fourth side 5, 5a, 5b, 5c, 5d, which may be:
- straight (figure 1b),
- stepped (figure 2b),
- curved (figure 3b),
- in the shape of letter C,
- in the shape of letter C with an elongated straight part (figure 4b), or
- in the shape of letter C with an elongated curved part (figure 5b).

Figures 1c to 5c show a view from above onto the curved panel made with the process comprising the following steps, in which the above-described embodiments of grooves and inserts have been used:
a) cutting the plate 1 to the required width and/or length,
b) making a suitable groove 7 in the area where the plate 1 prepared in step a) is to be curved for an angle 6, wherein
   - The groove 7 ends at a remaining two layers of veneer 2 of the plate 1, wherein the outermost layer is longitudinal veneer and the next layer is a transverse veneer, and
   - The said groove 7 has a cut-out 8, 8a, 8b, 8c, 8d that is straight, stepped, curved, letter C or S-like with an elongated straight or curved part, which extends to the inner part of the curve,
c) making a suitable shaping insert 3, 3a, 3b, 3c, 3d, having a straight first base side 4', 4'a, 4'b, 4'c, 4'd and a curved second base side 4, 4a, 4b, 4c, 4d having a curvature radius with regards to the angle 6, wherein both base sides are on both ends connected with a third and fourth side 5, 5a, 5b, 5c, 5d, which may be:
   - straight (figure 1b),
   - stepped (figure 2b),
   - curved (figure 3b),
   - in the shape of letter C,
   - in the shape of letter C with an elongated straight part (figure 4b), or
   - in the shape of letter C with an elongated curved part (figure 5b),
d) inserting the shaping insert 3, 3a, 3b, 3c, 3d made in the step c) and gluing the shaping insert 3, 3a, 3b, 3c, 3d into the groove 7,
e) bending of the plate 1 around the insert 3, 3a, 3b, 3c, 3d inserted in the groove 7 in the step d) to make the curved panel, and
f) optionally additional shaping and grinding of the curved panel made in the step e).

The embodiment shown in figure 4 is made in the following manner:
a) cutting the plate 1 to the required width and/or length,
b) making a suitable groove 7 in the area where the plate 1 prepared in step a) is to be curved for an angle 6, wherein:
   - The groove 7 ends at a remaining two layers of veneer 2 of the plate 1, wherein the outermost layer is longitudinal veneer and the next layer is a transverse veneer, and
   - The said groove 7 has a cut-out 8c shaped as the letter C with an elongated straight part 8c', which extends to the inner part of the curve,
c) making a suitable shaping insert 3c having a straight first base side 4'c and a curved second base side 4c having a curvature radius with regards to the angle 6, wherein both base sides are on both ends connected with a third and fourth sides 5c, which are shaped as the letter C with an elongated straight part (figure 4b),
d) inserting the shaping insert 3c made in the step c) and gluing the shaping insert 3c, into the groove 7 with a PVA or PU glue,
e) bending of the plate 1 around the insert 3c inserted in the groove 7 in the step d) to make the curved panel, and
f) optionally additional shaping and grinding of the curved panel made in the step e).

## Claims

1. A process for manufacturing furniture with at least one curved panel, wherein as starting material a common flat base plate is used, said plate being transformed into a curved panel with the following steps:
a) cutting the base plate (1) to a required width and/or length and optionally, addition of edge elements or tapes,
b) making a suitable transverse groove (7) in the area where the plate (1) prepared in step
a) is to be curved for an angle (6), wherein
- The groove (7) ends at a remaining thickness (2) of the plate (1), which is about 0.5 to 3 mm, preferably 2 mm of the thickness of the plate, and
- The said groove (7) has any cut-out (8, 8a, 8b, 8c, 8d),
c) making a suitable shaping insert (3, 3a, 3b, 3c, 3d), wherein its shape is arranged to be inserted into the said groove (7) prepared in the step b),
d) inserting the shaping insert (3, 3a, 3b, 3c, 3d) made in the step c) and optionally gluing or stabilizing the shaping insert (3, 3a, 3b, 3c, 3d) into the groove (7),
e) bending of the plate (1) around the insert (3, 3a, 3b, 3c, 3d) inserted in the groove (7) in the step d) to make the curved panel, and
f) optionally additional shaping, grinding and/or processing of the made curved panel made in the step e)
**characterized in that** the said groove (7) is made so that a part of the plate (2) remains intact, at least in the thickness of one first layer of veneer, which is a longitudinal veneer in order to allow optimal bending, while stability of the first outer veneer is ensured with a second layer of veneer, which is transverse to the first layer.

2. The process according to claim 1, **characterized in that** the cut-out (8, 8a, 8b, 8c, 8d) of the groove (7) is straights, stepped or curved, preferably in the shape of letter C which optionally has an elongated straight (8c') part or S curved part (8d'), which extends towards the inner part of the curve.

3. The process according to any of the preceding claims, **characterized in that** the shaping insert (3, 3a, 3b, 3c, 3d) has a straight first base side (4', 4'a, 4'b, 4'c, 4'd), and a second base side (4, 4a, 4b, 4c, 4d) curved in the suitable radius and with regards to the angle (6) of the required curve, wherein both base sides are on both ends connected with a third and a fourth side (5, 5a, 5b, 5c, 5d), which may be straight, stepped, curved, shaped as the letter C, shaped as the letter C with an elongated straight part or in the shape of the letter C with an elongated curved part.

4. The process according to any of the preceding claims, **characterized in that** one, two or more grooves (7) and shaping inserts (3, 3a, 3b, 3c, 3d) are made in case one, two or more curves are needed.

5. The process according to any of the preceding claims, **characterized in that** curvature angles are arbitrary from 10° to 180°, preferably 30°, 45°, 60°, 90°, 100°, while the curvature radio may be from 20 to 250 mm, usually around 60 mm.

6. The process according to any of the preceding claims, **characterized in that** the stabilization of the inset (3, 3a, 3b, 3c, 3d) in step d) is made with:
- gluing with PVA or PU glue, or
- installing a corner element in the inner part of the curve,
- gluing with a PVA glue and installing a corner element in the inner part of the curve.

7. A curved panel for furniture made with the process according to any of the preceding claims, such that it is made from a single flat panel (1) having a transverse groove (7), into which a shaping insert (3, 3a, 3b, 3c, 3d) is inserted around the said insert a part of the panel (1) with the groove (7) is curved, **characterized in that** the said groove (7) is made so that a part of the plate (2) remains intact, at least in the thickness of one first layer of veneer, which is usually a longitudinal veneer in order to allow optimal bending, while stability of the outer first veneer is ensured with a second layer of veneer, which is transverse to the first layer.

8. The curved panel according to the preceding claim, **characterized in that** the panel has one or more curved sections.

9. The curved panel according to claim 8 or 9, **characterized in that** further protective elements, such as a metal part, a water-resilient material or similar, can be installed on the curved panel.

10. Furniture with a curved panel according to any claim from 8 to 10.

11. Furniture according to the preceding claim, **characterized in that** it has at least one curved panel used for walls, sides, door, closets, doors of closets, drawer panels and similar elements having at least one curved part.

## Patentansprüche

1. Verfahren zur Herstellung von Möbeln mit mindestens einer gebogenen Platte, wobei als Ausgangsmaterial eine übliche ebene Grundplatte verwendet wird, wobei die Platte mithilfe der folgenden Schritte in eine gebogene Platte umgewandelt wird:
a) Zuschneiden der Grundplatte (1) auf eine erforderliche Breite und/oder Länge und optional Hinzufügen von Randelementen oder Bändern,
b) Herstellen einer geeigneten Quernut (7) in dem Bereich, in dem die in Schritt a) vorbereitete Platte (1) um einen Winkel (6) gebogen werden soll, wobei
- die Nut (7) mit einer Restdicke (2) der Platte (1) endet, die ungefähr 0,5 bis 3 mm beträgt, vorzugsweise 2 mm der Plattendicke, und
- die Nut (7) eine beliebige Aussparung (8, 8a, 8b, 8c, 8d) aufweist,
c) Herstellen eines geeigneten Formeinsatzes (3, 3a, 3b, 3c, 3d), wobei dessen Form ausgestaltet ist, um in die in Schritt b) vorbereitete Nut (7) eingesetzt werden zu können,
d) Einsetzen des in Schritt c) hergestellten Formeinsatzes (3, 3a, 3b, 3c, 3d) und optional Kleben oder Stabilisieren des Formeinsatzes (3, 3a, 3b, 3c, 3d) in die Nut (7),
e) Biegen der Platte (1) um den in Schritt d) in die Nut (7) eingesetzten Einsatz (3, 3a, 3b, 3c, 3d), um die gebogene Platte herzustellen, und
f) optional zusätzliches Formen, Schleifen und/oder Bearbeiten der in Schritt e) hergestellten gebogenen Platte,
**dadurch gekennzeichnet, dass** die Nut (7) so ausgeführt ist, dass ein Teil der Platte (2) intakt bleibt, mindestens in der Dicke einer ersten Furnierschicht, bei der es sich um ein Längsfurnier handelt, um eine optimale Biegung zu ermöglichen, während gleichzeitig die Stabilität des ersten Außenfurniers mit einer zweiten Furnierschicht, die quer zur ersten Schicht verläuft, gewährleistet wird.

2. Verfahren nach Anspruch 1, **dadurch gekennzeichnet, dass** die Aussparung (8, 8a, 8b, 8c, 8d) der Nut (7) gerade, gestuft oder gebogen ist, vorzugsweise in Form des Buchstabens C, der optional einen länglichen geraden (8c') Teil oder S-gekrümmten Teil (8d') aufweist, der sich zum inneren Teil der Krümmung hin erstreckt.

3. Verfahren nach einem der vorstehenden Ansprüche, **dadurch gekennzeichnet, dass** der Formeinsatz (3, 3a, 3b, 3c, 3d) eine gerade erste Basisseite (4', 4'a, 4'b, 4'c, 4'd) und eine zweite Basisseite (4, 4a, 4b, 4c, 4d) aufweist, die im geeigneten Radius und im Hinblick auf den Winkel (6) der erforderlichen Krümmung gebogen ist, wobei beide Basisseiten an beiden Enden mit einer dritten und vierten Seite (5, 5a, 5b, 5c, 5d) verbunden sind, die gerade, abgestuft, gebogen, als Buchstabe C geformt, als Buchstabe C mit einem verlängerten geraden Teil geformt oder in der Form des Buchstabens C mit einem länglichen gebogenen Teil sein können.

4. Verfahren nach einem der vorstehenden Ansprüche, **dadurch gekennzeichnet, dass** eine, zwei oder mehrere Nuten (7) und Formeinsätze (3, 3a, 3b, 3c, 3d) hergestellt werden, falls eine, zwei oder mehr Krümmungen erforderlich sind.

5. Verfahren nach einem der vorstehenden Ansprüche, **dadurch gekennzeichnet, dass** die Krümmungswinkel beliebig zwischen 10° und 180°, vorzugsweise 30°, 45°, 60°, 90°, 100° liegen, während der Krümmungswinkel zwischen 20 und 250 mm liegen kann, üblicherweise bei ca. 60 mm.

6. Verfahren nach einem der vorstehenden Ansprüche, **dadurch gekennzeichnet, dass** die Stabilisierung des Einsatzes (3, 3a, 3b, 3c, 3d) in Schritt d) erfolgt durch:
- Kleben mit PVA- oder PU-Kleber, oder
- Einbau eines Eckelements im inneren Teil der Krümmung,
- Kleben mit PVA-Kleber und Einbau eines Eckelements im inneren Teil der Krümmung.

7. Gebogene Platte für Möbel, hergestellt mit dem Verfahren nach einem der vorstehenden Ansprüche derart, dass sie aus einer einzigen flachen Platte (1) mit einer Quernut (7) hergestellt ist, in die ein Formeinsatz (3, 3a, 3b, 3c, 3d) eingesetzt wird, und um den Einsatz ein Teil der Verkleidung (1) mit der Nut (7) gebogen ist, **dadurch gekennzeichnet, dass** die Nut (7) so hergestellt ist, dass ein Teil der Platte (2) intakt bleibt, mindestens in der Dicke einer ersten Furnierschicht, die üblicherweise eine Längsfurnier ist, um eine optimale Krümmung zu ermöglichen, während die Stabilität des äußeren ersten Furniers mit einer zweiten Furnierschicht, die quer zur ersten Schicht verläuft, gewährleistet wird.

8. Gebogene Platte nach dem vorstehenden Anspruch, **dadurch gekennzeichnet, dass** die Platte eine oder mehrere gebogene Abschnitte aufweist.

9. Gebogene Platte nach Anspruch 8 oder 9, **dadurch gekennzeichnet, dass** auf der gebogenen Platte weitere Schutzelemente, wie ein Metallteil, ein wasserbeständiges Material oder Ähnliches, angebracht werden können.

10. Möbel mit einer gebogenen Platte nach einem der Ansprüche 8 bis 10.

11. Möbel nach dem vorstehenden Anspruch, **dadurch gekennzeichnet, dass** es mindestens eine gebogene Platte aufweist, die für Wände, Seiten, Türen, Schränke, Schranktüren, Schubladenplatten und ähnliche Elemente mit mindestens einem gebogenen Teil verwendet wird.

## Revendications

1. Un procédé de fabrication de meubles à panneaux courbes, panneaux courbes et meubles fabriqués selon ledit procédé, où une plaque de base plate commune est utilisée comme matériau de départ, ladite plaque étant transformée en panneau courbe en suivant les étapes suivantes :
a) découpe de la plaque de base (1) à la largeur et/ou à la longueur requises et facultativement, addition d'éléments ou de bandes de finition en bordure,
b) confection d'une rainure transversale appropriée (7) dans la zone où la plaque (1) préparée lors de l'étape a) doit être courbée pour obtenir un angle (6), où
- la rainure (7) se termine à une épaisseur résiduelle (2) de la plaque (1), qui est d'environ 0,5 à 3 mm, de préférence 2 mm de l'épaisseur de la plaque, et
- ladite rainure (7) peut posséder tout type de découpe (8, 8a, 8b, 8c, 8d),
c) confection d'un insert de mise en forme approprié (3, 3a, 3b, 3c, 3d), où la forme de celui-ci est conçue pour qu'il puisse être inséré dans ladite rainure (7) préparée lors de l'étape b),
d) insertion de l'insert de mise en forme (3, 3a, 3b, 3c, 3d) fabriqué lors de l'étape c) et facultativement collage ou stabilisation de l'insert de mise en forme (3, 3a, 3b, 3c, 3d) dans la rainure (7),
e) courbage de la plaque (1) autour de l'insert (3, 3a, 3b, 3c, 3d) inséré dans la rainure (7) lors de l'étape d) pour obtenir un panneau courbe, et
f) facultativement mise en forme, meulage et/ou transformation supplémentaires du panneau courbe obtenu lors de l'étape e)
**caractérisé par le fait que** ladite rainure (7) est réalisée de façon à ce qu'une partie de la plaque (2) reste intacte, au moins dans l'épaisseur d'une première couche de placage, qui est un placage longitudinal afin de permettre un courbage optimal, tandis que la stabilité de la première couche extérieure de placage est assurée par une seconde couche de placage, qui est transversale par rapport à la première couche.

2. Le procédé selon la revendication 1, **caractérisé par le fait que** la découpe (8, 8a, 8b, 8c, 8d) de la rainure (7) est droite, à paliers ou courbe, de préférence elle a la forme de la lettre C, qui facultativement a une partie droite allongée (8c') ou une partie courbe en S (8d'), qui se prolonge vers la partie intérieure de la courbe.

3. Le procédé selon l'une quelconque des revendications précédentes, **caractérisé par le fait que** l'insert de mise en forme (3, 3a, 3b, 3c, 3d) a une première face inférieure droite (4', 4'a, 4'b, 4'c, 4'd), et une seconde face inférieure (4, 4a, 4b, 4c, 4d) courbée selon un rayon approprié en fonction de l'angle (6) de courbure requis, où les deux faces inférieures sont aux deux extrémités connectées à une troisième et une quatrième faces (5, 5a, 5b, 5c, 5d), qui peuvent être droites, à paliers, courbes, en forme de C, en forme de C avec une partie droite allongée ou en forme de C avec une partie courbe allongée.

4. Le procédé selon l'une quelconque des revendications précédentes, **caractérisé par le fait qu'**une, deux ou plusieurs rainures (7) et inserts de mise en forme (3, 3a, 3b, 3c, 3d) sont fabriqués au cas où une, deux ou plusieurs courbures sont nécessaires.

5. Le procédé selon l'une quelconque des revendications précédentes, **caractérisé par le fait que** les angles de courbure sont arbitraires et compris entre 10° et 180°, de préférence 30°, 45°, 60°, 90°, 100°, tandis que le rayon de courbure peut être de 20 à 250 mm, habituellement autour de 60 mm.

6. Le procédé selon l'une quelconque des revendications précédentes, **caractérisé par le fait que** la stabilisation de l'insert (3, 3a, 3b, 3c, 3d) lors de l'étape d) est réalisée à l'aide de :
- un collage avec de la colle PVA ou PU, ou
- l'installation d'un élément d'angle dans la partie interne de la courbure,
- un collage avec de la colle PVA et l'installation d'un élément d'angle dans la partie interne de la courbure.

7. Un panneau courbe pour meubles fabriqué conformément au procédé selon l'une quelconque des revendications précédentes, **caractérisé par le fait qu'**il est fabriqué à partir d'un panneau plat unique (1) ayant une rainure transversale (7), dans laquelle un insert de mise en forme (3, 3a, 3b, 3c, 3d) est inséré, autour dudit insert une partie du panneau (1) avec rainure (7) est courbée, **caractérisé par le fait que** ladite rainure (7) est réalisée de façon à ce qu'une partie de la plaque (2) reste intacte, au moins dans l'épaisseur d'une première couche de placage, qui est généralement un placage longitudinal afin de permettre un courbage optimal, tandis que la stabilité de la première couche extérieure de placage est assurée par une seconde couche de placage, qui est transversale par rapport à la première couche.

8. Le panneau courbe selon la revendication qui précède, **caractérisé par le fait qu'**il possède une ou plusieurs sections courbes.

9. Le panneau courbe selon la revendication 8 ou 9, **caractérisé par le fait que** des éléments de protection supplémentaires, tels qu'une pièce métallique, un matériau résistant à l'eau ou similaire, peuvent être installés sur le panneau courbe.

10. Meubles avec un panneau courbe selon l'une quelconque des revendications 8 à 10.

11. Meubles selon la revendication précédente, **caractérisés en ce qu'**ils possèdent au moins un panneau courbe utilisé pour des murs, parois latérales, portes, placards, portes de placards, panneaux de tiroir et éléments similaires ayant au moins une partie courbe.
